# EUROPÄISCHE PATENTSCHRIFT

(11) **EP 3 558 796 B1**
(45) Veröffentlichungstag und Bekanntmachung des Hinweises auf die Patenterteilung: **10.08.2022**
(21) Anmeldenummer: 18716560.0
(22) Anmeldetag: 29.03.2018
(51) Int. Cl.: B62D 33/06

(54) **EINSATZFAHRZEUG**
INTERVENTION VEHICLE
VÉHICULE D'INTERVENTION

(30) Priorität: 03.04.2017 DE 102017205601
(43) Veröffentlichungstag der Anmeldung: 30.10.2019
(73) Patentinhaber: Albert Ziegler GmbH, 89537 Giengen an der Brenz (DE)
(72) Erfinder: RUHDORFER, Max, 71409 Schwaikheim (DE); MENZ, Daniel, 89564 Nattheim (DE); QUINTENZ, Tobias, 89275 Elchingen (DE)
(74) Vertreter: Patentanwälte Magenbauer & Kollegen Partnerschaft mbB
(86) Internationale Anmeldenummer: PCT/EP2018/058162
(87) Internationale Veröffentlichungsnummer: WO 2018/185003

(56) Entgegenhaltungen:
- EP-A1- 1 223 094
- WO-A1-95/21088
- US-B1- 6 276 748
- US-B1- 6 557 230
- US-B1- 6 719 361

## Beschreibung

Die Erfindung betrifft ein Einsatzfahrzeug, insbesondere Feuerwehrfahrzeug, mit einer Fahrer-Kabine und einem in Fahrzeugmindestlängsrichtung dahinter angeordneten, mit der Fahrer-Kabine verbundenen Kabinenmodul, wobei zur Verbindung von Fahrer-Kabine und Kabinenmodul wenigstens eine Klebeverbindung vorhanden ist, und wobei zur Verbindung von Fahrer-Kabine und Kabinenmodul eine Befestigungseinrichtung vorhanden ist und die wenigstens eine Klebeverbindung zwischen der Befestigungseinrichtung und der Fahrer-Kabine und/oder der Befestigungseinrichtung und dem Kabinenmodul ausgebildet ist, wobei die Befestigungseinrichtung als ein sowohl gegenüber der Fahrer-Kabine als auch gegenüber dem Kabinenmodul separates Bauteil ausgebildet ist, und wobei die Befestigungseinrichtung einen rahmenartigen Befestigungsflansch aufweist, der einerseits mit der Fahrer-Kabine und andererseits mit dem Kabinenmodul verbunden ist, wobei die wenigstens eine Klebeverbindung zwischen der Fahrer-Kabine und dem Befestigungsflansch und/oder dem Kabinenmodul und dem Befestigungsflansch ausgebildet ist.

Die US 6,714,361 b1 offenbart einen Lastkraftwagen mit einer Fahrerkabine, an die je nach Bedarf eine Schlafkabine oder eine Rückwand angeflanscht werden kann.

Die EP 1 223 094 A1 offenbart ein Schienenfahrzeug, mit einem Wagenkasten-Rohbau aus Metall und einem Fahrzeugkopf aus faserverstärktem Kunststoff, die durch Kleben oder Zuhilfenahme eines als Portal ausgeführten Profils aneinander befestigt sind. Der Klebevorgang erfolgt durch Auffüllen eines zwischen einem umlaufenden Schenkel des Fahrzeugkopfs und einer U-förmigen Aufnahme bestehenden Spalts.

Die US 6,276,748 B1 offenbart ein Nutzfahrzeug, bei dem eine Schlafkabine an einer Fahrerkabine befestigt werden kann, wobei hier Klebemittel zum Einsatz kommen.

Ein Einsatzfahrzeug ist beispielsweise auch aus der DE 20 2010 016 192 U1 bekannt, bei dem ein Kabinenmodul in Form eines Mannschaftsraummoduls vorgesehen ist, das separat von der Fahrer-Kabine ausgebildet und von dieser montierbar ist. Das Mannschaftsraummodul besitzt hierzu zwei Befestigungsschnittstellen, worüber es wahlweise über eine erste Befestigungsschnittstelle fest mit der Fahrer-Kabine und relativ zum Fahrzeug-Montagerahmen beweglich oder über eine zweite Befestigungsschnittstelle fest mit dem Fahrzeug-Montagerahmen und relativ zur Fahrer-Kabine beweglich montiert ist.

Die AT 413 205 B offenbart ein Feuerwehrfahrzeug mit einem auf einem Fahrgestellrahmen gelagerten Aufbau und mit einer um eine quer zur Fahrtrichtung verlaufende horizontale Achse verschwenkbaren Fahrer-Kabine und zumindest einer auf dem Fahrgestell gelagerten Mannschafts- und/oder Gerätekabine. Es sind einander gegenüberliegende Öffnungen in einer Rückwand der Fahrerkabine und einer Querwand der Mannschafts- und/oder Gerätekabine vorgesehen, die gemeinsam einen Durchgang bilden, der von einer lösbaren Verbindungseinrichtung mit einem flexiblen Balgdichtelement umfasst ist.

Bei der Herstellung herkömmlicher Einsatzfahrzeuge wählt der Kunde zunächst in der Regel das Fahrgestell mit Fahrer-Kabine eines Lkw-Herstellers aus. Auf den Fahrgestell-Montagerahmen wird dann hinter der Fahrer-Kabine ein kundenspezifischer Aufbau montiert. Zur Montage einer Mannschaftsraumkabine wird zunächst die Rückwand der Fahrer-Kabine ausgeschnitten, um einen Durchgang zwischen der Fahrer-Kabine und dem Mannschaftsraumkabine zu schaffen. Das Mannschaftsraummodul bzw. die Mannschaftsraumkabine wird dann an die Rückwand der Fahrer-Kabine geschweißt oder geschraubt.

Aufgabe der Erfindung ist es, ein Einsatzfahrzeug, insbesondere Feuerwehrfahrzeug, der eingangs erwähnten Art zu schaffen, bei der die Verbindung zwischen Fahrer-Kabine und Kabinenmodul in einfacher Weise, kostengünstig und schnell möglich ist.

Diese Aufgabe wird durch ein Einsatzfahrzeug mit den Merkmalen des unabhängigen Anspruchs 1 gelöst. Weiterbildungen der Erfindung sind in den Unteransprüchen dargestellt.

Das erfindungsgemäße Einsatzfahrzeug zeichnet sich dadurch aus, dass der Befestigungsflansch und die Fahrer-Kabine und/oder der Befestigungsflansch und das Kabinenmodul mehrere einander gegenüberliegende Fügeflächen aufweisen, die zumindest teilweise als miteinander verklebte Klebeflächen ausgebildet sind.

Beim erfindungsgemäßen Einsatzfahrzeug kann zumindest teilweise auf ein zeitaufwendiges Verschrauben oder Verschweißen von Kabinenmodul und Fahrer-Kabine verzichtet werden. Im Vergleich zu Schraubverbindungen bietet die wenigstens eine Klebeverbindung auch eine nicht unerhebliche Gewichtsersparnis.

Zur Verbindung von Fahrer-Kabine und Kabinenmodul ist eine Befestigungseinrichtung vorhanden, wobei die wenigstens eine Klebeverbindung zwischen der Befestigungseinrichtung und der Fahrer-Kabine und/oder zwischen der Befestigungseinrichtung und dem Kabinenmodul ausgebildet ist. Die Befestigungseinrichtung könnte auch als Adapter bezeichnet werden, der zwischen der Fahrer-Kabine und dem Kabinenmodul angeordnet ist und zum einfachen Anschluss des Kabinenmoduls an unterschiedliche Fahrer-Kabinen verschiedener Lkw-Hersteller erlaubt. Es ist möglich, die Befestigungseinrichtung einerseits mit der Fahrer-Kabine und andererseits mit dem Kabinenmodul zu verkleben. Es ist jedoch auch möglich, dass zusätzlich zur wenigstens einen Klebeverbindung wenigstens eine Formschlussverbindung, insbesondere Schrauben- und/oder Nietverbindung vorhanden ist.

Die Befestigungseinrichtung ist als ein sowohl gegenüber der Fahrer-Kabine als auch gegenüber dem Kabinenmodul separates Bauteil ausgebildet.

Die Befestigungseinrichtung weist einen rahmenartigen Befestigungsflansch auf, der einerseits mit der Fahrer-Kabine und andererseits mit dem Kabinenmodul verbunden ist, wobei die wenigstens eine Klebeverbindung zwischen der Fahrer-Kabine und dem Befestigungsflansch und/oder dem Kabinenmodul und dem Befestigungsflansch ausgebildet ist. Zweckmäßigerweise ist der Befestigungsflansch als Metallprofilteil, beispielsweise als Stahl- oder Aluminium-Profilteil, ausgebildet.

Der Befestigungsflansch und die Fahrer-Kabine und/oder der Befestigungsflansch und das Kabinenmodul weisen mehrere einander gegenüberliegende Fügeflächen auf, die zumindest teilweise als miteinander verklebte Klebeflächen ausgebildet sind. Es ist möglich, dass die gesamten einander gegenüberliegenden Fügeflächen als Klebeflächen ausgebildet sind oder alternativ nur mehrere einander zugeordnete Bereiche der Fügeflächen als Klebeflächen ausgebildet sind.

Bei einer Weiterbildung der Erfindung weist der Befestigungsflansch ein zwischen einer Rückwand der Fahrer-Kabine und dem Kabinenmodul angeordnetes Portalsegment auf, an dem flanschseitige Klebeflächen ausgebildet sind. Ferner ist zweckmäßigerweise ein am unteren Ende des Portalsegments ausgebildetes Fußsegment vorhanden, wobei vorzugsweise am Fußsegment ebenfalls flanschseitige Klebeflächen ausgebildet sind.

Bei einer Weiterbildung der Erfindung weisen eine Rückwand der Fahrer-Kabine und das Kabinenmodul einander zugeordnete insbesondere einen Durchgang bildende Öffnungen auf, die über das Portalsegment der Befestigungsflansch aneinander angeschlossen sind. Insbesondere im Falle einer als Mannschaftsraummodul ausgebildeten Kabinenmoduls ist in der Regel zwischen der Fahrer-Kabine und dem Mannschaftsraummodul ein Durchgang ausgebildet. Der Befestigungsflansch der Befestigungseinrichtung umrahmt daher die Öffnungen, insbesondere den Durchgang.

Bei einer Weiterbildung der Erfindung weist das Portalsegment zwei sich in einer Fahrzeug-Höhenrichtung erstreckende Seitenholme und einen die beiden Seitenholme miteinander verbindenden Querholm auf. Zweckmäßigerweise ist das Portalsegment als einstückiges Profilteil, insbesondere Metallprofilteil, ausgebildet.

In besonders bevorzugter Weise weist das Portalsegment einen ersten Befestigungsabschnitt, der eine erste Fügefläche aufweist, deren Normalenvektor im Wesentlichen parallel zur Fahrzeug-Längsrichtung ausgerichtet ist, und einen zweiten Befestigungsabschnitt auf, der eine zweite Fügefläche aufweist, deren Normalenvektot im Wesentlichen quer zur Fahrzeug-Längsrichtung ausgerichtet ist, wobei der ersten und zweiten Fügefläche jeweils an der Fahrer-Kabine oder am Kabinenmodul ausgebildete kabinenseitige Fügeflächen zugeordnet sind. Bei einem parallel zur Fahrzeug-Längsrichtung ausgerichteten Normalenvektor der ersten Fügefläche werden folglich Befestigungsabschnitt des Portalsegments und zugeordnete kabinenseitige Fügefläche in Fahrzeug-Längsrichtung auf Stoß aneinander gefügt. Hingegen wird bei einer zweiten Fügefläche mit einem quer zur Fahrzeug-Längsrichtung ausgerichteten Normalenvektor das Fügen mit der zugeordneten kabinenseitigen Fügefläche quer zur Fahrzeug-Längsrichtung durchgeführt.

Bei einer Weiterbildung der Erfindung sind erste und zweite Befestigungsabschnitte sowohl an den Seitenholmen als auch am Querholm des Portalsegments ausgebildet.

Bei einer Weiterbildung der Erfindung sind die erste Fügefläche und die zugeordnete kabinenseitige Fügefläche mittels einer Formschlussverbindung miteinander verbunden und die zweite Fügefläche und die zugeordnete kabinenseitige Fügefläche zumindest teilweise als miteinander verklebte Klebeflächen ausgebildet.

Es ist möglich, dass der ersten Fügefläche eine Fügefläche am Kabinenmodul und der zweiten Fügefläche eine Fügefläche an der Fahrer-Kabine zugeordnet sind.

Es ist möglich, dass das Fußsegment eine die beiden Seitenholme des Portalsegments miteinander verbindenden Basisabschnitt und wenigstens einen senkrecht zum Basisabschnitt und parallel zur Fahrzeug-Längsrichtung ausgerichteten Profilträger aufweist, der mit einem zugeordneten Befestigungsprofil an der Fahrer-Kabine oder am Kabinenmodul verbunden ist. Zweckmäßigerweise ist der Profilträger als Rohr-Stutzen ausgebildet. Zweckmäßigerweise ist das Rohr als Vierkant-Rohr ausgebildet. Insbesondere sind zwei im Wesentlichen parallel zueinander ausgerichtete Profilträger vorgesehen, die jeweils mit einem zugeordneten Befestigungsprofil an der Fahrer-Kabine oder am Kabinenmodul verbunden sind. Zweckmäßigerweise befindet sich das wenigstens eine Befestigungsprofil an der Fahrer-Kabine.

Besonders bevorzugt sind am Profilträger und am Befestigungsprofil einander gegenüberliegende Fügeflächen ausgebildet, die zumindest teilweise als miteinander verklebte Klebeflächen ausgebildet sind.

Ein bevorzugtes Ausführungsbeispiel der Erfindung ist in der Zeichnung dargestellt und wird im Folgenden näher erläutert. In der Zeichnung zeigen:
- Figur 1: eine Seitenansicht eines bevorzugten Ausführungsbeispiels des erfindungsgemäßen Einsatzfahrzeugs,
- Figur 2: eine Seitenansicht des Einsatzfahrzeugs von Figur 1 bei aufgeklappter Baueinheit aus Fahrer-Kabine und Mannschaftsraummodul,
- Figur 3: eine perspektivische Darstellung des Fahrgestells des erfindungsgemäßen Einsatzfahrzeugs in einer Ansicht von schräg vorne,
- Figur 4: eine perspektivische Darstellung des Fahrgestells von Figur 3 aus einer Ansicht von schräg hinten,
- Figur 5: eine perspektivische Darstellung des Fahrgestells des erfindungsgemäßen Einsatzfahrzeugs mit angebauten Kabinenmodul,
- Figur 6: eine perspektivische Darstellung des Kabinenmoduls mit daran befestigter Befestigungseinrichtung,
- Figur 7: eine perspektivische Darstellung der Befestigungseinrichtung zur Befestigung des Kabinenmoduls an der Fahrer-Kabine,
- Figur 8: eine perspektivische Darstellung des Kabinenmoduls ohne Befestigungseinrichtung,
- Figur 9: eine perspektivische Darstellung des Kabinenmoduls mit Sicht auf die Bodenplatte,
- Figur 10: eine perspektivische Darstellung auf das lösbare Schloss zwischen Kabinenmodul und Fahrgestell und
- Figur 11: eine perspektivische Darstellung der Lagerung des Kabinenmoduls am Fahrgestell.

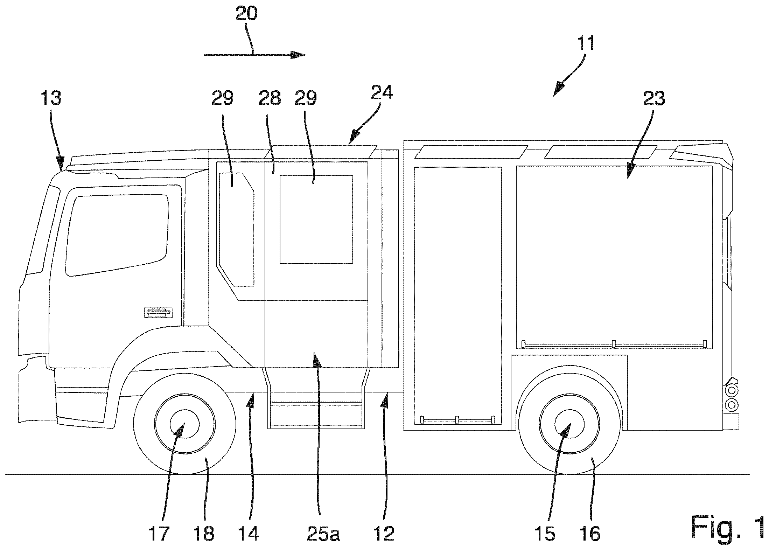

Die Figuren 1 bis 11 zeigen ein bevorzugtes Ausführungsbeispiel des erfindungsgemäßen Einsatzfahrzeugs 11. Das Einsatzfahrzeug 11 ist beispielhaft in Form eines Feuerwehrfahrzeugs dargestellt. Es kann sich hier beispielsweise um ein Löschgruppenfahrzeug handeln.

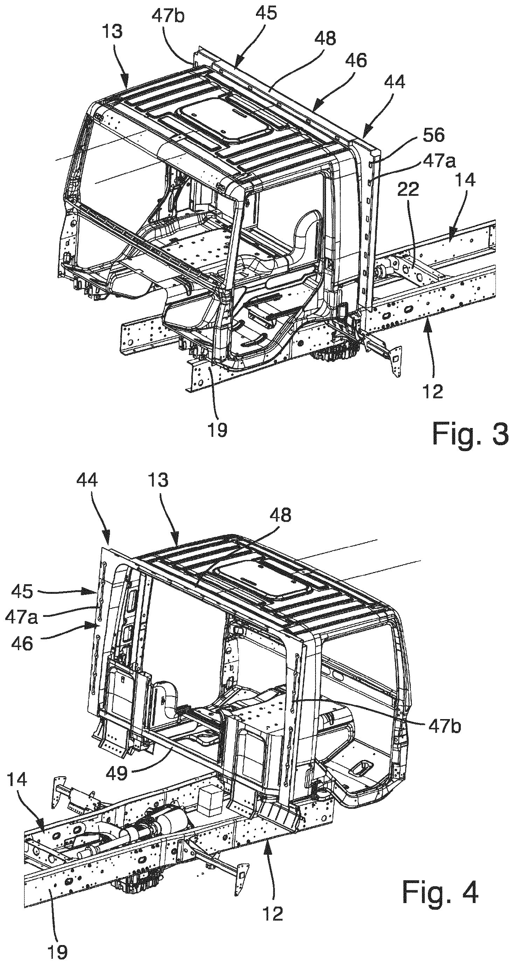

Das Einsatzfahrzeug 11 besitzt ein Fahrgestell 12 (Figuren 3 und 4), das im vorderen Bereich eine Fahrer-Kabine 13 aufweist, von der sich aus ein Fahrzeug-Montagerahmen 14 nach hinten erstreckt, an dem beispielsweise in an sich bekannter Weise die Hinterachse 15 mit den Hinterrädern 16 angeordnet ist. Die Vorderachse 17 mit den Vorderrädern 18 befindet sich unterhalb der Fahrer-Kabine 13. Der Fahrzeug-Montagerahmen 14 besteht aus einem Längsrahmen mit wenigstens zwei parallel zueinander in Fahrzeug-Längsrichtung 20 verlaufenden Längsträgern 19. De beiden Längsträger 19 sind an definierten Stellen über mehrere Querträger 22 miteinander verbunden.

Auf dem Fahrzeug-Montagerahmen 14 befindet sich im hinteren Bereich ein Kastenaufbau 23 zur Unterbringung von Nutzlast, insbesondere Rettungsgeräten, Pumpen, Scheinwerfern oder sonstigem Zubehör. Der Kastenaufbau 23 ist im Beispielsfall als tiefgezogener Gerätekoffer ausgebildet.

Wie insbesondere in den Figuren 1, 2 und 5 gezeigt, befindet sich zwischen der Fahrer-Kabine 13 und im Kastenaufbau 23 ein Kabinenmodul 24 in Form eines Mannschaftsraummoduls.

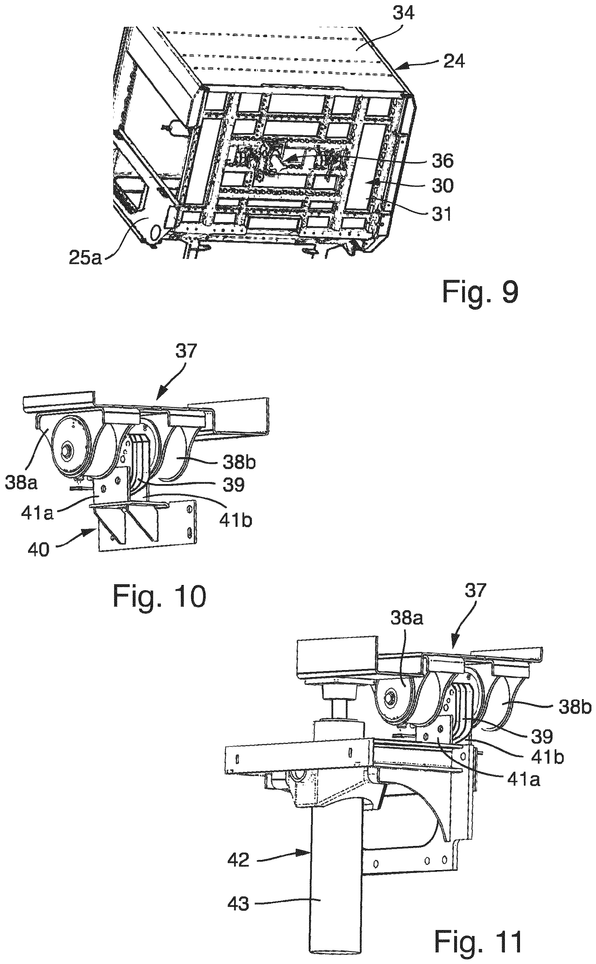

Das Kabinenmodul 24 ist separat von der Fahrer-Kabine 13 ausgebildet und ist vorgefertigt, indem einzelne Elemente, wie in Figur 9 dargestellt ist, zusammengebaut werden. Das vorgefertigte Kabinenmodul 24 wird dann in nachfolgend noch näher erläuterte Weise mit der Fahrer-Kabine 13 verbunden.

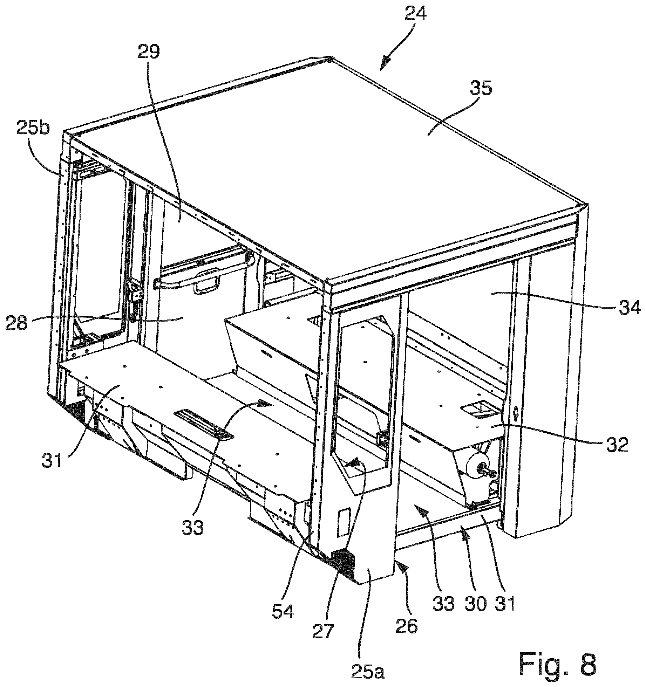

Wie insbesondere in Figur 8 gezeigt, besteht das Kabinenmodul 24 aus verschiedenen Einzelbaugruppen, die zum kompletten Kabinenmodul 24 zusammenmontiert werden. Es sind zwei einander gegenüberliegende Seitenteile 25a, 25b vorgesehen, die jeweils Türausschnitte 26 und Fensterausschnitte 27 aufweisen. Die Seitenteile 25a, 25b sind in bevorzugter Weise als Blechprofile, insbesondere Aluminium-Blechprofile, ausgebildet. In die Türausschnitte 26 wird jeweils eine Tür 28 eingesetzt, die zweckmäßigerweise ebenfalls als Aluminiumprofil ausgebildet ist. In die Fensterausschnitte 27 wird jeweils ein Fenster 29 eingesetzt.

Es ist ferner eine Bodengruppe 30 vorgesehen, die zweckmäßigerweise als Stahl-Profil ausgebildet ist. Die Bodengruppe 30 besitzt ein plattenartiges Basiselement 31, an dessen Unterseite eine Verbindung mit dem Fahrgestell 12 in nachfolgend noch näher beschriebener Weise erfolgt. An das Bodenelement 31 sind oberseitig zwei einander gegenüberliegende Sitzgruppenkonsolen 32a, 32b angesetzt, zwischen denen sich ein sich zwischen den beiden Seitenteilen 25a, 25b erstreckender Gang 33 erstreckt. Auf die Sitzgruppenmodule 32 lassen sich jeweils Sitze (nicht dargestellt) montieren. Es ist ferner noch eine Rückwand 34 und ein Deckenelement 35 vorgesehen, die zweckmäßigerweise aus Verbundmaterial bestehen, insbesondere als GFK-Sandwich ausgebildet sind.

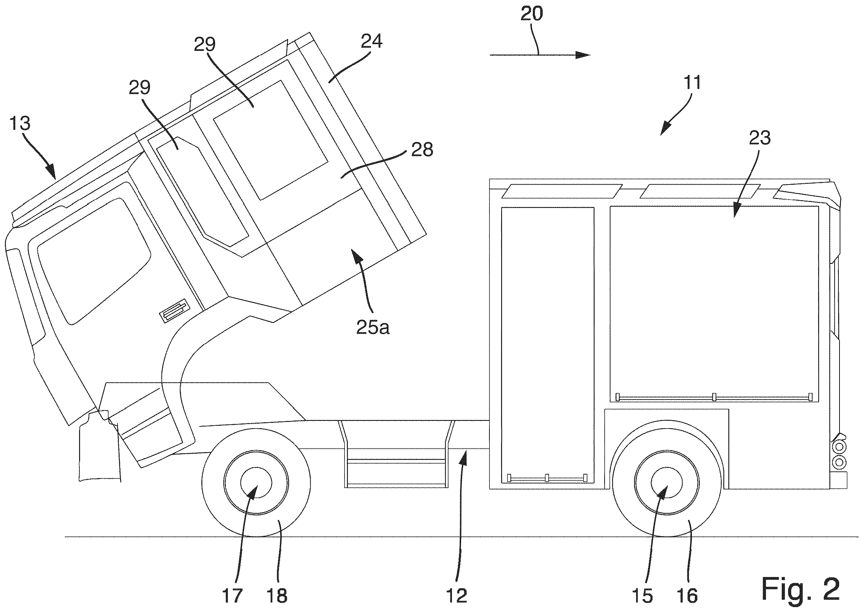

Wie insbesondere in Figur 9 dargestellt, ist das Kabinenmodul 24 mit dem Fahrgestell 12 über eine Verbindungseinrichtung 36 verbunden. Die Verbindungseinrichtung 36 befindet sich an der Unterseite der Bodengruppe 30 und weist ein Schloss 37 auf, über das die Fahrer-Kabine 13 und das damit verbundene Kabinenmodul 24 gemeinsam vom Fahrgestell 12 gelöst und hochgeklappt werden können, wie es in Figur 2 dargestellt ist. Dadurch wird ein Zugang zu den im Fahrgestell 12 befindlichen Teilen des Fahrzeugs, insbesondere zu Motor- und Getriebeteilen, ermöglicht.

Das Schloss 37 besitzt im gezeigten Beispielsfall 2 an der Unterseite der Bodengruppe 30 nach unten abstehende Schenkel 38a, 38b, die zwischen sich ein Verriegelungselement 39 aufnehmen. Das Verriegelungselement 39 wirkt mit einem Lager 40 zusammen, dass an einem der beiden Längsträger 19 des Fahrgestells 12 angeordnet, insbesondere dort angeschweißt ist. Das Lager 40 besitzt zwei parallel zueinander verlaufende Lagerschenkel 41a, 41b, zwischen die das Verriegelungselement 39 eintaucht. Das Verriegelungselement 39 wird mit einem Verschlussbolzen (nicht dargestellt) am Lager 40 gehalten. Diese Anordnung befindet sich in identischer Weise auch am anderen der beiden Längsträger 19 des Fahrgestells 12 und hierzu zugeordnet an der Bodengruppe 30.

Wie insbesondere in Figur 11 dargestellt, wirkt zwischen dem Kabinenmodul 24 und dem Fahrgestell 12 eine Dämpfungseinrichtung 42, die beispielhaft in Form eines Fluiddämpfers 43, insbesondere Hydraulikdämpfers, dargestellt ist. Der Fluiddämpfer 43 ist an der Unterseite der Bodengruppe 30 gelagert.

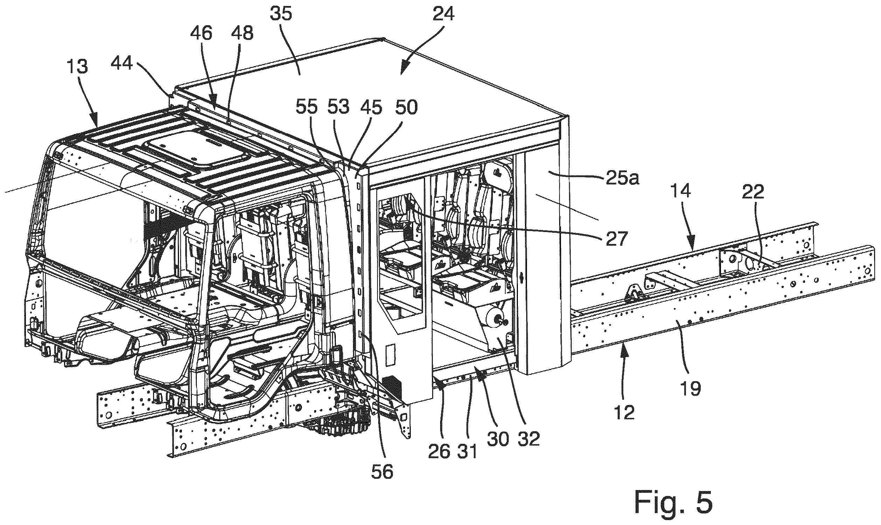

Wie insbesondere in den Figuren 5, 6 und 7 gezeigt, ist zur Verbindung von Fahrer-Kabine 13 und Kabinenmodul 24 wenigstens eine Klebeverbindung vorhanden.

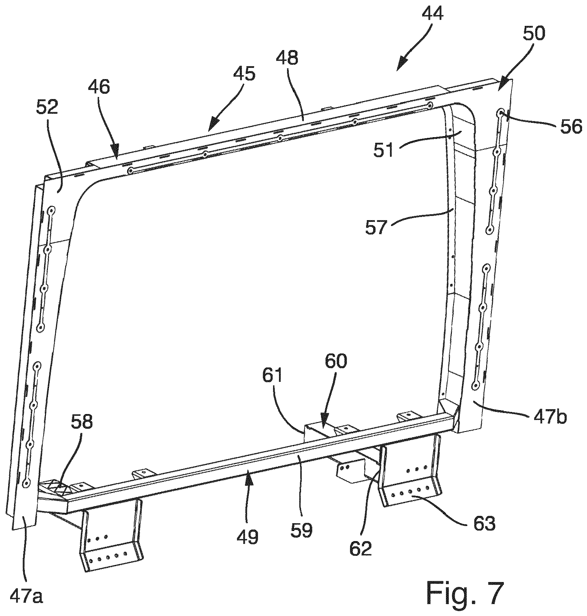

Die Klebeverbindung wird mittels einer Befestigungseinrichtung 44 verwirklicht, d.h., Fahrer-Kabine 13 und Kabinenmodul 24 sind nicht direkt miteinander verklebt, was auch möglich wäre, sondern unter Zwischenschaltung der Befestigungseinrichtung 44. Wie insbesondere in Figur 7 dargestellt, weist die Befestigungseinrichtung 44 einen rahmenartigen Befestigungsflansch 45 auf. Der rahmenartige Befestigungsflansch 45 ist als Adapter ausgebildet und bietet die Möglichkeit, dass das vorgefertigte Kabinenmodul 24 an Fahrer-Kabinen 13 unterschiedlicher Lkw-Hersteller angeschlossen werden kann.

Der rahmenartige Befestigungsflansch 45 ist als Metallprofilteil, insbesondere als Stahl-Profilteil ausgebildet.

Der Befestigungsflansch 45 besitzt ein Portalsegment 46, das seinerseits zwei sich in einer Fahrzeug-Höhenrichtung erstreckende Seitenholme 47a, 47b und einen die beiden Seitenholme 47a, 47b miteinander verbindenden Querholm 48 aufweist. Ferner besitzt der Befestigungsflansch 45 ein am unteren Ende des Portalsegments 46, die beiden Seitenholme 47a, 47b miteinander verbindendes Fußsegment 49.

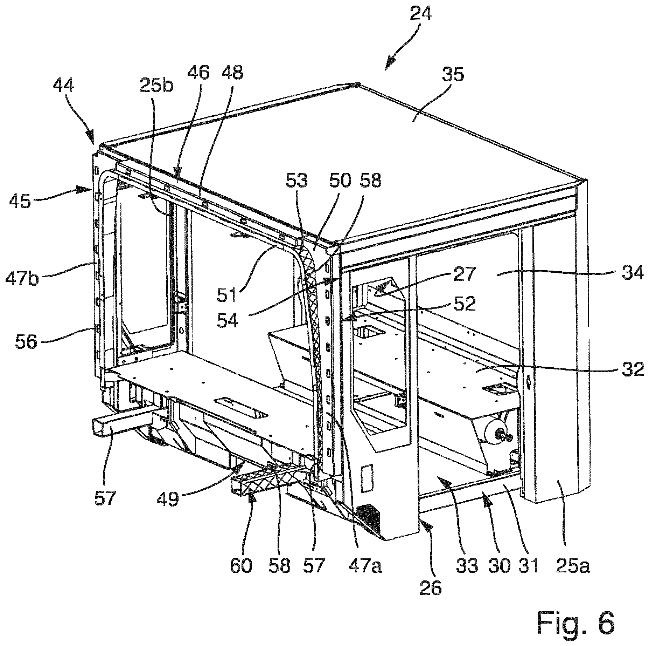

Wie insbesondere in den Figuren 6 und 7 gezeigt, besitzt das Portalsegment 46 mehrere unterschiedlich ausgerichtete Befestigungsabschnitte 50, 51, die jeweils Fügeflächen 52, 53 aufweisen, wobei Letzteren an der Fahrer-Kabine 13 oder am Kabinenmodul 24 ausgebildete kabinenseitige Fügeflächen 54, 55 zugeordnet sind.

Im gezeigten Beispielsfall besitzt das Portalsegment 46 einen ersten Befestigungsabschnitt 51, der eine erste Fügefläche 52 aufweist, deren Normalenvektor im Wesentlichen parallel zur Fahrzeug-Längsrichtung ausgerichtet ist. Zweckmäßiger Weise dient der erste Befestigungsabschnitt 50 mit seiner ersten Fügefläche 52 zur Anbindung des Befestigungsflansches 45 an das Kabinenmodul 24, wirkt also mit der kabinenseitigen ersten Fügefläche 54 zusammen. Wie insbesondere in Figur 6 dargestellt, befinden sich am ersten Befestigungsabschnitt 50 im Bereich der Seitenholme 47a, 47b in Fahrzeug-Höhenrichtung übereinanderliegende Montagelöcher 56, worüber unter Zuhilfenahme geeigneter Befestigungsmittel, insbesondere Befestigungsschrauben, der Befestigungsflansch 45 an das Kabinenmodul 24 angeschraubt wird. Dabei liegen die Seitenholme 47a, 47b mit ihren dort ausgebildeten ersten Fügeflächen 52 an Stirnseiten der Seitenteile 25a, 25b des Kabinenmoduls 24 an und sind dort mit den Seitenteilen 25a, 25b verschraubt.

Das Portalsegment 46 besitzt ferner einen zweiten Befestigungsabschnitt 51, der eine zweite Fügefläche 53 aufweist, deren Normalenvektor jedoch im Wesentlichen quer zur Fahrzeug-Längsrichtung 20 ausgerichtet ist. Wie insbesondere in Figur 6 gezeigt, befindet sich der zweite Befestigungsabschnitt und somit die zweite Fügefläche 53 an der Außenseite eines vom ersten Befestigungsabschnitt in Fahrzeug-Längsrichtung 20 abstehenden Stutzens 57.

Ein wesentlicher Aspekt der Erfindung ist, dass der Befestigungsflansch 45 und die Fahrer-Kabine 12 und/oder der Befestigungsflansch 45 und das Kabinenmodul 24 mehrere einander gegenüberliegende Fügeflächen 52, 53, 54, 55 aufweisen, die zumindest teilweise als miteinander verklebte Klebeflächen ausgebildet sind.

Im gezeigten Beispielsfall ist die Klebeverbindung zwischen dem Befestigungsflansch 45 und der Fahrer-Kabine 13 ausgebildet, während der Befestigungsflansch andererseits an das Kabinenmodul 24 angeschraubt ist.

Wie insbesondere in Figur 6 dargestellt, bilden daher die zweite Fügefläche 53 am zweiten Befestigungsabschnitt 51, also die Außenseite des Stutzens 57 und die zugeordnete zweite Fügefläche, im Bereich der Rückwand der Fahrer-Kabine 13 miteinander verklebte Klebeflächen 58.

Wie insbesondere in den Figuren 6 und 7 dargestellt, besitzt das Fußsegment 49 des Befestigungsflansches 45 einen die beiden Seitenholme 47a, 47b des Portalsegments 46 miteinander verbindenden Basisabschnitt 59 und wenigstens einen senkrecht zum Basisabschnitt 59 und parallel zur Fahrzeug-Längsrichtung 20 ausgerichteten Profilträger 60. Im gezeigten Beispielsfall sind zwei parallel zueinander angeordnete Profilträger 60 vorgesehen, die als Rohr-Stutzen ausgebildet sind, wobei vorzugsweise Vierkant-Rohre vorgesehen sind. Die Rohr-Stutzen befinden sich an der Unterseite des Basisabschnitts 59 und sind insbesondere dort angeschweißt. Die Rohr-Stutzen besitzen ein erstes Ende 61, das zweckmäßiger Weise offen ist und ein zweites Ende 62, an dem sich, wie insbesondere in Figur 7 gezeigt, eine Montageplatte 63 befindet, die an die Bodengruppe 30 des Kabinenmoduls 24 montiert, insbesondere dort angeschraubt wird.

Die Rohr-Stutzen, insbesondere die offenen ersten Enden 61 hiervon, wirken mit einem Befestigungsprofil (nicht dargestellt) an der Fahrer-Kabine 13 zusammen, insbesondere in der Art, dass die ersten Enden 61 der Rohr-Stutzen in die ebenfalls als Vierkant-Rohre ausgebildeten Befestigungsprofile eingesteckt werden.

An den Profilträgern 60, also an den Rohr-Stutzen, des Fußsegments 49 einerseits und an den zugeordneten Befestigungsprofilen an der Fahrer-Kabine 13 andererseits, sind einander gegenüberliegende Fügeflächen (nicht dargestellt) ausgebildet, die zumindest teilweise als miteinander verklebte Klebeflächen 58 ausgebildet sind.

Zur Montage des Feuerwehrfahrzeugs gemäß bevorzugtem Ausführungsbeispiel wird zunächst das Fahrgestell 12 mit Fahrer-Kabine 13 eines Lkw-Herstellers gemäß Kundenwunsch bereitgestellt. Als nächstes wird die Rückwand der Fahrer-Kabine 13 entfernt, insbesondere ausgeschnitten. Parallel hierzu wird das Kabinenmodul 24 vorgefertigt, indem die Einzelbaugruppen, also die Bodengruppe 30, die Seitenteile 25a, 25b, die Rückwand 34 und das Deckenelement 35 unter Einfügung der Fenster und Türen 28, 29 zum Kabinenmodul in Form eines Mannschaftsraummoduls zusammengebaut wird.

Wie insbesondere in Figur 6 gezeigt, besitzt das vorgefertigte Kabinenmodul keine der Rückwand der Fahrer-Kabine gegenüberliegende Wand, sondern ist vorderseitig offen.

Als nächstes wird entweder der Befestigungsflansch 45 mit der offenen Rückwand der Fahrer-Kabine 13 verklebt oder es wird zunächst der Befestigungsflansch an die offene Vorderwand des Kabinenmoduls 24 angeschraubt. Danach wird entweder das Kabinenmodul mit dem angeschraubten Befestigungsflansch 45 an die Fahrer-Kabine 13 geklebt, oder es wird das Kabinenmodul 24 ohne Befestigungsflansch 45, der bereits an die Fahrer-Kabine 13 geklebt ist, an den Befestigungsflansch 45 geschraubt. Dadurch entsteht eine feste Einheit von Fahrer-Kabine 13 und Kabinenmodul 24, so dass sich diese Einheit als Ganzes ggf. wie in Figur 2 gezeigt, hochschwenken lässt.

## Patentansprüche

1. Einsatzfahrzeug, insbesondere Feuerwehrfahrzeug, mit einer Fahrer-Kabine (13) und einem in Fahrzeug-Längsrichtung (20) dahinter angeordneten, mit der Fahrer-Kabine (13) verbundenen Kabinenmodul (24), wobei zur Verbindung von Fahrer-Kabine (13) und Kabinenmodul (24) wenigstens eine Klebeverbindung vorhanden ist, und wobei zur Verbindung von Fahrer-Kabine (13) und Kabinenmodul (24) eine Befestigungseinrichtung (44) vorhanden ist und die wenigstens eine Klebeverbindung zwischen der Befestigungseinrichtung (44) und der Fahrer-Kabine (13) und/oder der Befestigungseinrichtung (44) und dem Kabinenmodul (24) ausgebildet ist, wobei die Befestigungseinrichtung (44) als ein sowohl gegenüber der Fahrer-Kabine (13) als auch gegenüber dem Kabinenmodul (24) separates Bauteil ausgebildet ist, und wobei die Befestigungseinrichtung (44) einen rahmenartigen Befestigungsflansch (45) aufweist, der einerseits mit der Fahrer-Kabine (13) und andererseits mit dem Kabinenmodul (24) verbunden ist, wobei die wenigstens eine Klebeverbindung zwischen der Fahrer-Kabine (13) und dem Befestigungsflansch (45) und/oder dem Kabinenmodul (24) und dem Befestigungsflansch (45) ausgebildet ist, **dadurch gekennzeichnet, dass** der Befestigungsflansch (45) und die Fahrer-Kabine (13) und/oder der Befestigungsflansch (45) und das Kabinenmodul (24) mehrere einander gegenüberliegende Fügeflächen (52, 53, 54, 55) aufweisen, die zumindest teilweise als miteinander verklebte Klebeflächen (58) ausgebildet sind.

2. Einsatzfahrzeug nach Anspruch 1, **dadurch gekennzeichnet, dass** zusätzlich zu wenigstens einer Klebeverbindung wenigstens eine Formschlussverbindung, insbesondere Schraub- und/oder Nietverbindung vorgesehen ist.

3. Einsatzfahrzeug nach Anspruch 1 oder 2, **dadurch gekennzeichnet, dass** der Befestigungsflansch (45) ein zwischen einer Rückwand der Fahrer-Kabine (13) und dem Kabinenmodul (24) angeordnetes Portalsegment (46) aufweist, an dem flanschseitige Klebeflächen ausgebildet sind, und ein am unteren Ende des Portalsegments (46) ausgebildetes Fußsegment (49) besitzt, wobei vorzugsweise am Fußsegment (49) ebenfalls flanschseitige Klebeflächen ausgebildet sind.

4. Einsatzfahrzeug nach Anspruch 3, **dadurch gekennzeichnet, dass** die Rückwand der Fahrer-Kabine (13) und eine Vorderseite des Kabinenmoduls (24) einander zugeordnete, insbesondere einen Durchgang erlaubende Öffnungen aufweisen, die über das Portalsegment (46) des Befestigungsflansches (45) aneinander angeschlossen sind.

5. Einsatzfahrzeug nach Anspruch 3 oder 4, **dadurch gekennzeichnet, dass** das Portalsegment (46) zwei sich in einer Fahrzeug-Höhenrichtung erstreckende Seitenholme (47a, 47b) und eine die beiden Seitenholme (47a, 47b) miteinander verbindenden Querholm (48) aufweist.

6. Einsatzfahrzeug nach einem der Ansprüche 3 bis 5, **dadurch gekennzeichnet, dass** das Portalsegment (46) einen ersten Befestigungsabschnitt (50) aufweist, der eine erste Fügefläche (52) aufweist, deren Normalenvektor im Wesentlichen parallel zur Fahrzeug-Längsrichtung (20) ausgerichtet ist und einen zweiten Befestigungsabschnitt (51) besitzt, der eine zweite Fügefläche (53) aufweist, deren Normalenvektor im Wesentlichen quer zur Fahrzeug-Längsrichtung (20) ausgerichtet ist, wobei der ersten und zweiten Fügefläche (52), (53) jeweils an der Fahrer-Kabine (13) oder am Kabinenmodul (24) ausgebildete kabinenseitige Fügeflächen (52), (53) zugeordnet sind.

7. Einsatzfahrzeug nach Anspruch 6, **dadurch gekennzeichnet, dass** erste und zweite Befestigungsabschnitte (50, 51) sowohl an den Seitenholmen (47a, 47b) als auch am Querholm (48) ausgebildet sind.

8. Einsatzfahrzeug nach Anspruch 6 oder 7, **dadurch gekennzeichnet, dass** die erste Fügefläche (52) und die zugeordnete kabinenseitige Fügefläche (54) mittels einer Formschlussverbindung miteinander verbunden sind und eine zweite Fügefläche (52) und die zugeordnete kabinenseitige Fügefläche (55) zumindest teilweise als miteinander verklebte Klebeflächen (58) ausgebildet sind.

9. Einsatzfahrzeug nach Anspruch 8, **dadurch gekennzeichnet, dass** der ersten Fügefläche (52) eine Fügefläche (54) am Kabinenmodul (24) und der zweiten Fügeflache (53) eine Fügefläche (55) an der Fahrer-Kabine (13) zugeordnet sind.

10. Einsatzfahrzeug nach einem der Ansprüche 3 bis 9, **dadurch gekennzeichnet, dass** das Fußsegment (49) einen die beiden Seitenholme (47a, 47b) des Portalsegments (46) miteinander verbindenden Basisabschnitt (59) und wenigstens einen senkrecht zum Basisabschnitt (59) und parallel zur Fahrzeug-Längsrichtung (20) ausgerichteten Profilträger (60) aufweist, der mit einem zugeordneten Befestigungsprofil an der Fahrer-Kabine (13) oder am Kabinenmodul (24) verbunden ist.

11. Einsatzfahrzeug nach Anspruch 10, **dadurch gekennzeichnet, dass** am Profilträger (60) und am Befestigungsprofil einander gegenüberliegende Fügeflächen ausgebildet sind, die zumindest teilweise als miteinander verklebte Klebeflächen (58) ausgebildet sind.

## Claims

1. Emergency vehicle, in particular fire engine, with a driver's cab (13) and a cab module (24) located behind the former in the longitudinal direction (20) of the vehicle and joined to the driver's cab (13), wherein at least one adhesive bond is provided to join the driver's cab (13) to the cab module (24) and wherein a fastening device (44) is provided to join the driver's cab (13) to the cab module (24) and the at least one adhesive bond is formed between the fastening device (44) and the driver's cab (13) and/or between the fastening device (44) and the cab module (24), wherein the fastening device (44) is designed as a component separate both from the driver's cab (13) and from the cab module (24), and wherein the fastening device (44) has a frame-like fastening flange (45) joined to the driver's cab (13) on one side and to the cab module (24) on the other side, wherein the at least one adhesive bond is formed between the driver's cab (13) and the fastening flange (45) and/or the cab module (24) and the fastening flange (45), **characterised in that** the fastening flange (45) and the driver's cab (13) and/or the fastening flange (45) and the cab module (24) have several joint surfaces (52, 53, 54, 55) located opposite one another, which are at least partially designed as mutually bonded adhesive surfaces (58).

2. Emergency vehicle according to claim 1, **characterised in that**, in addition to at least one adhesive bond, at least one positive connection, in particular a screw joint and/or a rivet joint, is provided.

3. Emergency vehicle according to claim 1 or 2, **characterised in that** the fastening flange (45) has a portal segment (46), which is located between a rear wall of the driver's cab (13) and the cab module (24) and at which flange-side adhesive surfaces are formed, and a foot segment (49) formed at the lower end of the portal segment (46), wherein flange-side adhesive surfaces are preferably formed at the foot segment (49) as well.

4. Emergency vehicle according to claim 3, **characterised in that** the rear wall of the driver's cab (13) and a front side of the cab module (24) have openings assigned to one another and allowing a passage in particular, which are connected to one another by way of the portal segment (46) of the fastening flange (45).

5. Emergency vehicle according to claim 3 or 4, **characterised in that** the portal segment (46) has two side bars (47a, 47b) extending in a vertical direction of the vehicle and a transverse bar (48) joining the two side bars (47a, 47b) to each other.

6. Emergency vehicle according to any of claims 3 to 5, **characterised in that** the portal segment (46) has a first fastening section (50) having a first joint surface (52), the normal vector of which is oriented substantially parallel to the longitudinal direction (20) of the vehicle, and a second fastening section (51) having a second joint surface (53), the normal vector of which is oriented substantially transversely to the longitudinal direction (20) of the vehicle, wherein cab-side joint surfaces (52), (53) formed at the driver's cab (13) or at the cab module (24) are assigned to each of the first and second joint surfaces (52), (53).

7. Emergency vehicle according to claim 6, **characterised in that** first and second fastening sections (50, 51) are formed both at the side bars (47a, 47b) and at the transverse bar (48).

8. Emergency vehicle according to claim 6 or 7, **characterised in that** the first joint surface (52) and the associated cab-side joint surface (54) are joined to each other by means of a positive connection and a second joint surface (52) and the associated cab-side joint surface (55) are at least partially designed as mutually adhesive-bonded adhesive surfaces (58).

9. Emergency vehicle according to claim 8, **characterised in that** a joint surface (54) at the cab module (24) is assigned to the first joint surface (52) and a joint surface (55) at the driver's cab (13) is assigned to the second joint surface (53).

10. Emergency vehicle according to any of claims 3 to 9, **characterised in that** the foot segment (49) has a base section (59) joining the two side bars (47a, 47b) of the portal segment (46) to each other and at least one profiled beam (60), which is oriented perpendicular to the base section (59) and parallel to the longitudinal direction (20) of the vehicle and joined to an associated fastening profile at the driver's cab (13) or at the cab module (24).

11. Emergency vehicle according to claim 10, **characterised in that** joint surfaces located opposite each other and designed as at least partially adhesive-bonded joint surfaces (58) are formed at the profiled beam (60) and at the fastening profile.

## Revendications

1. Véhicule d'intérêt général, en particulier véhicule de sapeurs-pompiers, avec une cabine de conducteur (13) et un module de cabine (24) disposé derrière celle-ci dans la direction longitudinale de véhicule (20), relié à la cabine de conducteur (13), dans lequel pour la liaison de la cabine de conducteur (13) et du module de cabine (24) au moins une liaison adhésive est présente, et dans lequel pour la liaison de la cabine de conducteur (13) et du module de cabine (24) un dispositif de fixation (44) est présent et la au moins une liaison adhésive est réalisée entre le dispositif de fixation (44) et la cabine de conducteur (13) et/ou le dispositif de fixation (44) et le module de cabine (24), dans lequel le dispositif de fixation (44) est réalisé en tant que composant séparé aussi bien par rapport à la cabine de conducteur (13) que par rapport au module de cabine (24), et dans lequel le dispositif de fixation (44) présente une bride de fixation (45) du type cadre, qui est reliée d'une part à la cabine de conducteur (13) et d'autre part au module de cabine (24), dans lequel la au moins une liaison adhésive est réalisée entre la cabine de conducteur (13) et la bride de fixation (45) et/ou le module de cabine (24) et la bride de fixation (45), **caractérisé en ce que** la bride de fixation (45) et la cabine de conducteur (13) et/ou la bride de fixation (45) et le module de cabine (24) présentent plusieurs surfaces d'assemblage (52, 53, 54, 55) opposées les unes aux autres, qui sont réalisées au moins en partie en tant que surfaces adhésives (58) collées les unes aux autres.

2. Véhicule d'intérêt général selon la revendication 1, **caractérisé en ce qu'**en plus d'au moins une liaison adhésive au moins une liaison par coopération de formes, en particulier liaison vissée et/ou rivetée est prévue.

3. Véhicule d'intérêt général selon la revendication 1 ou 2, **caractérisé en ce que** la bride de fixation (45) présente un segment de portique (46) disposé entre une paroi arrière de la cabine de conducteur (13) et le module de cabine (24), sur lequel des surfaces adhésives côté bride sont réalisées, et un segment de pied (49) réalisé sur l'extrémité inférieure du segment de portique (46), dans lequel de préférence des surfaces adhésives côté bride sont également réalisées sur le segment de pied (49).

4. Véhicule d'intérêt général selon la revendication 3, **caractérisé en ce que** la paroi arrière de la cabine de conducteur (13) et une face avant du module de cabine (24) présentent des ouvertures associées les unes aux autres, permettant en particulier un passage, qui sont raccordées les unes aux autres par l'intermédiaire du segment de portique (46) de la bride de fixation (45).

5. Véhicule d'intérêt général selon la revendication 3 ou 4, **caractérisé en ce que** le segment de portique (46) présente deux traverses latérales (47a, 47b) s'étendant dans une direction en hauteur de véhicule et une traverse transversale (48) reliant les deux traverses latérales (47a, 47b) l'une à l'autre.

6. Véhicule d'intérêt général selon l'une quelconque des revendications 3 à 5, **caractérisé en ce que** le segment de portique (46) présente une première partie de fixation (50), qui présente une première surface d'assemblage (52), dont le vecteur normal est orienté sensiblement parallèlement à la direction longitudinale de véhicule (20) et possède une deuxième partie de fixation (51), qui présente une deuxième surface d'assemblage (53), dont le vecteur normal est orienté sensiblement transversalement à la direction longitudinale de véhicule (20), dans lequel des surfaces d'assemblage (52), (53) côté cabine respectivement réalisées sur la cabine de conducteur (13) ou sur le module de cabine (24) sont associées à la première et deuxième surface d'assemblage (52), (53).

7. Véhicule d'intérêt général selon la revendication 6, **caractérisé en ce que** les première et deuxième parties de fixation (50, 51) sont réalisées aussi bien sur les traverses latérales (47a, 47b) que sur la traverse transversale (48).

8. Véhicule d'intérêt général selon la revendication 6 ou 7, **caractérisé en ce que** la première surface d'assemblage (52) et la surface d'assemblage (54) côté cabine associée sont reliées l'une à l'autre au moyen d'une liaison par coopération de formes et une deuxième surface d'assemblage (52) et la surface d'assemblage (55) côté cabine associée sont réalisées au moins en partie en tant que surfaces adhésives (58) collées les unes avec les autres.

9. Véhicule d'intérêt général selon la revendication 8, **caractérisé en ce qu'**une surface d'assemblage (54) sur le module de cabine (24) est associée à la première surface d'assemblage (52) et une surface d'assemblage (55) sur la cabine de conducteur (13) à la deuxième surface d'assemblage (53).

10. Véhicule d'intérêt général selon l'une quelconque des revendications 3 à 9, **caractérisé en ce que** le segment de pied (49) présente une partie de base (59) reliant les deux traverses latérales (47a, 47b) du segment de portique (46) l'une à l'autre et au moins un support de profilé (60) orienté perpendiculairement à la partie de base (59) et parallèlement à la direction longitudinale de véhicule (20), qui est relié à un profilé de fixation associé sur la cabine de conducteur (13) ou sur le module de cabine (24).

11. Véhicule d'intérêt général selon la revendication 10, **caractérisé en ce que** des surfaces d'assemblage opposées les unes aux autres sont réalisées sur le support de profilé (60) et sur le profilé de fixation, qui sont réalisées au moins en partie sous la forme de surfaces d'assemblage (58) collées les unes avec les autres.
